# EUROPEAN PATENT APPLICATION

(11) **EP 4 772 855 A1**
(43) Date of publication of application: **08.07.2026**
(21) Application number: 25315005.6
(22) Date of filing: 06.01.2025
(51) Int. Cl.: G01N 15/01, G01N 15/075, G01N 21/53

(54) **OPTICAL CELL DENSITY SENSOR**

(71) Applicant: Thermo Electron SAS, 91140 Villebon-sur-Yvette (FR); Fiberlite Centrifuge LLC, Santa Clara, CA 95054 (US); Thermo Orion Inc., Chelmsford, MA 01824 (US)
(72) Inventor: Limon, Benoit, 91140 Villebon-sur-Yvette (FR); Piramoon, Sina, Santa Clara, CA 95054 (US); Srinivasan, Kannan, Chelmsford, MA 01824 (US); Xie, Yanjiao, Chelmsford, MA 01824 (US); Cook, Ian, Chelmsford, MA 01824 (US); Faulkenberry, Stephen, Chelmsford, MA 01824 (US)
(74) Representative: Boult Wade Tennant LLP

(57) **Abstract**

An optical cell density sensor is provided. The optical cell density sensor comprising: a light source arranged to emit light in a first direction for passing through a flow of fluid with suspended cells; a first detector substantially aligned with the first direction, arranged to detect attenuated light from the light source and generate an attenuated light signal; a second detector substantially offset from the first direction, arranged to detect scattered light from the light source and generate a scattered light signal; and a processor configured to calculate cell density based on the attenuated light signal and the scattered light signal.

## Description

### Field

The present specification relates to an optical cell density sensor, for measuring cell density in a flow of fluid with suspended cells.

### Background

Traditional cell density measurement systems require physical interaction with the sample fluid being tested. In the field of bioprocessing this is disadvantageous since it requires sterilisation routines and additional plumbing connections.

The Dencytee sensor of Hamilton Company uses an optical-based measurement for concentration of a cell suspension. A light emitter and a light detector are set-up aligned with one another. Near infra-red wavelength light is shone through the cell suspension from the light emitter and a measure is made of how much of this light reaches the light detector. The light which does not reach the light detector has been absorbed by the suspended cells. Thus, an estimate of the cell density can be made.

However, this method can be susceptible to errors and is still used with the probe in direct contact with the sample being tested.

There is therefore a need for an improved cell density sensor.

The AquaSensor^{™} DataStick^{™} Wide-Range Turbidity Measurement System from ThermoFisher Scientific provides a turbidity sensor, but not a cell density sensor.

### Summary

An optical cell density sensor is provided, comprising: a light source arranged to emit light in a first direction for passing through a flow of fluid with suspended cells; a first detector substantially aligned with the first direction, arranged to detect attenuated light from the light source and generate an attenuated light signal; a second detector substantially offset from the first direction, arranged to detect scattered light from the light source and generate a scattered light signal; and a processor configured to calculate cell density based on the attenuated light signal and the scattered light signal. This includes: the first detector aligned with the first direction; and/or the second detector offset from the first direction.

This can effectively measure cell density without contacting the fluid, while using two measures to improve the reliability of the measurement.

The processor may be configured to calculate cell density based on a comparison of the attenuated light signal and the scattered light signal. That is, the relative sizes of each signal. Comparing the two signals in this manner can be an effective way to determine cell density.

The comparison may be a ratio of the scattered light signal to the attenuated light signal. This ratio can be an effective way to determine the cell density.

The first detector may comprise a first detector surface for detecting light, with a first detector plane defined perpendicular to the first detector surface, the first detector plane and the first direction defining a first angle therebetween, the first angle between ±10°. This is generally aligned with the direction of the emitted light, and hence corresponds to an amount of light able to pass through the fluid.

The first detector plane and the first direction may be substantially parallel. This includes parallel. This is a strict alignment with the direction of the emitted light, and hence corresponds to an amount of light able to pass through the fluid.

The second detector may define a second detector surface for detecting light, with a second detector plane perpendicular to the second detector surface, the second detector plane and the first direction defining a second angle therebetween, the second angle between 80° and 100°. This is generally mis-aligned with the direction of the emitted light, and hence corresponds to an amount of light which impinges on the suspended cells in the fluid and is hence deflected.

The first detector plane and the second detector plane may be substantially perpendicular. This includes perpendicular. Having the two detector planes at such an angle can improve the comparison between the two measurements.

The second detector plane and the first direction may be substantially perpendicular. This includes perpendicular. This is directly mis-aligned with the direction of the emitted light, and hence corresponds to an amount of light which impinges on the suspended cells in the fluid and is hence deflected.

An optical cell density sensor apparatus is provided, comprising: the optical cell density sensor as discussed herein; and a sensor cell for receiving the flow of fluid with suspended cells, the sensor cell arranged with the first direction passing through a testing section of the sensor cell. The sensor cell can help standardise conditions, to improve accuracy of the cell density sensor.

The sensor cell may comprise an cell input for attachment to a fluid input line and a cell output for attachment to a fluid output line. This can allow any fluid input/output lines to be connected to the standardised sensor cell.

The testing section may have a regular polygonal cross-section. This regular shape can help with improving accuracy and repeatability of readings from the sensor.

The testing section may be substantially cuboid. This includes cuboid. Again, this is a regular shape which can help with improving accuracy and repeatability of readings from the sensor.

The testing section may have a polished outer surface. This can improve transmission of the emitted light through the sensor, and thus the accuracy of the sensor.

The sensor cell may comprise a rigid frame supporting the testing section. This helps ensure that the testing section is positioned in the same place/orientation with respect to the optical cell density sensor, which can help improve accuracy and repeatability of readings from the sensor.

The rigid frame may be substantially U-shaped comprising a central body with a first arm projecting from a first end of the central body and a second arm projecting from a second end of the central body, the testing section extending between the first arm and the second arm. This includes U-shaped. This is an effective way to support the testing section, so that the accuracy and repeatability of the senso readings may be improved.

The testing section may be supported by the rigid frame with one or more springs between the testing section and the rigid frame. These springs can provide a pressure between the rigid frame and the testing section. This helps ensure that the sensor cell is secured and sealed, which can allow for high-pressure fluid flow therethrough.

The sensor cell may further comprise a non-linear flow path for the flow of fluid. Such non-linear flow path can allow for the testing section to be covered so that outside light does not affect the sensor readings.

The flow path may be substantially U-shaped comprising a central section with a first projecting section at a first end of the central section and a second projecting section at a second end of the central section. This includes U-shaped. Again, this flow path can allow for the testing section to be covered so that outside light does not affect the sensor readings.

An optical cell density sensor assembly is provided, comprising: the optical cell density sensor as discussed herein, or the optical cell density sensor apparatus as discussed herein; and a manifold housing with an internal sensing cavity, the internal sensing cavity shielded from external light, wherein the light source, first detector and second detector are arranged in the internal sensing cavity. Shielding the sensing cavity from external light in this manner helps in avoiding external light affecting the sensor readings.

The manifold housing may be formed of a first manifold housing section and a second manifold housing section attachable to one another, wherein the first manifold housing section comprises one or more grooves and the second manifold housing section comprises one or more protrusions, or vice versa, each groove for receiving a corresponding protrusion with the first manifold housing section attached to the second manifold housing section. The protrusion(s) and groove(s) can help to shield the internal sensing cavity, to help in avoiding external light affecting the sensor readings. Corresponding in this context means that, when assembled, the protrusion is received in its corresponding groove.

The first manifold housing section may comprise at least one groove and at least one protrusion, and the second manifold housing section comprises at least one corresponding projection and at least one corresponding groove. This is an effective arrangement for the manifold housing sections to help in avoiding external light affecting the sensor readings.

A centrifuge assembly is provided, comprising: a centrifuge; and the optical cell density sensor assembly as discussed herein. This centrifuge assembly allows for effective measurement of the fluid cell density using the sensor, and can be used in the control system/processing of the centrifuge.

A method of measuring cell density in a flow of fluid with suspended cells is provided, the method comprising: emitting light in a first direction passing through the flow of fluid; detecting attenuated light substantially aligned with the first direction and generating an attenuated light signal; detecting scattered light substantially offset from the first direction and generating a scattered light signal; and calculating cell density based on the attenuated light signal and the scattered light signal. This includes: attenuated light aligned with the first direction; and/or scattered light offset from the first direction.

This can effectively measure cell density without contacting the fluid, while using two measures to improve the reliability of the measurement.

The cell density may be calculated based on a comparison of the attenuated light signal and the scattered light signal. That is, the relative sizes of each signal. Comparing the two signals in this manner can be an effective way to determine cell density.

The comparison may be a ratio of the scattered light signal to the attenuated light signal. This ratio can be an effective way to determine the cell density.

The attenuated light may be detected at a first angle to the first direction, the first angle between ±10°. This is generally aligned with the direction of the emitted light, and hence corresponds to an amount of light able to pass through the fluid.

The attenuated light may be detected substantially parallel to the first direction. This includes parallel. This is a strict alignment with the direction of the emitted light, and hence corresponds to an amount of light able to pass through the fluid.

The scattered light may be detected at a second angle to the first direction, the second angle between 80° and 100°. This is generally mis-aligned with the direction of the emitted light, and hence corresponds to an amount of light which impinges on the suspended cells in the fluid and is hence deflected.

The scattered light may be detected substantially perpendicular to the first direction. This includes perpendicular. This is directly mis-aligned with the direction of the emitted light, and hence corresponds to an amount of light which impinges on the suspended cells in the fluid and is hence deflected.

### Brief Description of Drawings

The present specification makes reference, by way example only, to the accompanying drawings, in which:
Figure 1 shows a schematic cross-section of an optical cell density sensor;
Figure 2 shows a sensor cell for an optical cell density sensor apparatus;
Figure 2A shows the sensor cell of Figure 2 in a partially disassembled state;
Figure 3 shows a manifold housing for an optical cell density sensor assembly;
Figure 4 shows a schematic of an optical cell density sensor assembly, with a section of the manifold housing is shown transparent; and
Figure 5 shows an optical cell density sensor assembly.

### Detailed Description

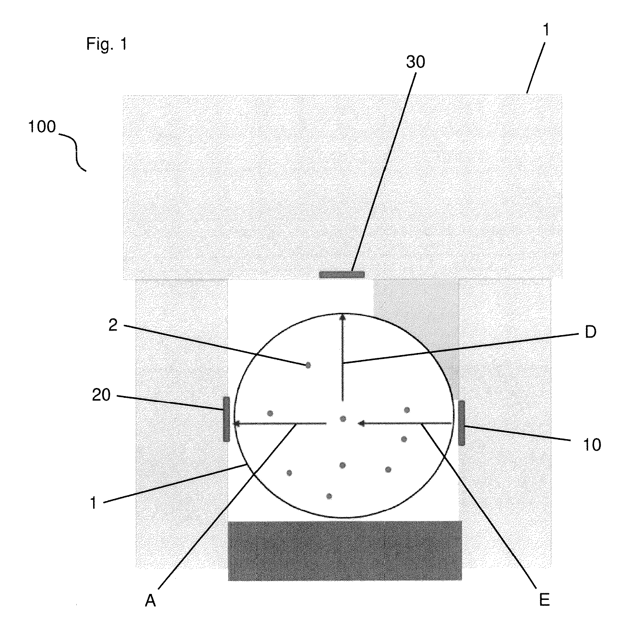

An optical cell density sensor 100 is shown in Figure 1. This optical cell density sensor 100 can also be referred to as a cell density sensor 100 or even just a density sensor 100. The optical cell density sensor 100 can be used as a part of an optical cell density sensor apparatus, with a sensor cell 50. The optical cell density sensor 100 can also be used as a part of an optical cell density sensor assembly 300 with a manifold housing 60, optionally also with the sensor cell 50.

The optical cell density sensor 100 is suitable for detecting a cell density in a fluid comprising suspended cells 2 (also identified as entrained cells 2). The fluid may be static, but in certain cases the fluid (and hence the suspended cells 2) may be flowing past the optical cell density sensor 100. Cell density is a measure of an amount of cells 2 in a unit volume. For example, this could be measured in cells per litre (cells/L). Where there is a flow of fluid, the volume can be calculated based on an area of the fluid flow and the flow speed. Cell density in this context can also be considered as a concentration.

The optical cell density sensor 100 comprises a light source 10 (also identified as a light emitter). This could be, for example, a bulb or a laser generator - or indeed any other type of light source 10. The light source 10 is arranged or configured to emit light in a first direction E - as shown by the arrow directed away from the light source 10 in Figure 1. The light source 10 may be arranged to emit light which is outside of the visible spectrum. For example, this could comprise or consist (essentially) of light in the infrared spectrum (from around 750 nanometres (nm) to 1 millimetre (mm)). Specifically, this could be the near-infrared spectrum (from around 750 nm up to 2500 nm).

The light emitted from the light source 10 passes through the fluid with suspended cells 2. That is, the fluid with suspended particles 2 may pass through a conduit 1 which extends through the first direction E. This conduit could be, for example, tubing 4. In examples where a sensor cell 50 is provided, the conduit 1 could be a testing section 51.

Photons of the emitted light will be able to pass substantially undeflected through the fluid. As a result, these photons will continue moving in substantially the first direction E. Photons which pass through in this manner can be identified as attenuated light (or attenuated photons) which are travelling in an attenuation direction A. The attenuation direction A substantially aligned with (e.g. parallel to) the first direction E.

However, photons of the emitted light which impact one (or more) of the suspended cells 2 will be deflected away from the first direction E, or may be (at least partially) absorbed by the cell 2. Photons which are deflected will then travel in a deflection direction D. Of course, each photon may be deflected in a different direction and so there would be a plurality of different deflection directions. Each deflected direction is transverse to the first direction E (and/or the attenuation direction A). Reference to "the deflected direction D" therefore indicates a deflected direction of the plurality of different deflection directions. Specifically, this could be a selected deflected direction D. Figure 1 shows an example where the deflected direction D is substantially perpendicular (including perpendicular) to the first direction E (and/or the attenuation direction A). Photons which are deflected in this manner can be identified as scattered light (or scattered photons).

The optical cell density sensor 100 further comprises a first detector 20. That is, a first optical detector 20. The first detector 20 is arranged to detect light and generate a signal indicative thereof - specifically the strength of the detected light.

The first detector 20 is substantially aligned with the first direction E (and hence with the attenuation direction A). In this context, aligned indicates that a sensing window of the first detector 20 is arranged to receive incident light travelling in the first direction E and/or the attenuation direction A. The following description will refer to the first direction E, but it is appreciated that this could additionally or alternatively refer to the attenuation direction A.

Typically, the first detector 10 will comprise a detector surface which detects the light that impacts thereupon. A first detector plane is then defined perpendicular to this first detector surface. The first detector plane is substantially aligned with the first direction E. Specifically, a first angle may be defined between the first detector plane and the first direction E. This first angle may be between ±10°, when defined as the acute angle between the first detector plane and the first direction E. That is, 10° in either direction. Specifically, the first detector plane and the first direction E may be substantially parallel (including parallel). In other words, the first angle may be substantially 0° (including 0°).

The first detector 20 therefore receives attenuated light from the light source 10. The first detector 20 generates an attenuated light signal which is indicative of the amount of attenuated light received. This attenuated light signal is indicative of the cell density - more suspended cells 2 results in a reduction in the attenuated light signal. In other words, the attenuated light signal is inversely proportional to the cell density.

The optical cell density sensor 100 further comprises a second detector 30. That is, a second optical detector 30. The second detector 30 is arranged to detect light and generate a signal indicative thereof - specifically the strength of the detected light.

The second detector 30 is substantially offset from the first direction E. That is, the second detector 30 may be substantially transverse to the first direction E. In this context, offset indicates that a sensing window of the second detector 30 is arranged to receive incident light travelling in the deflected direction D. In other words, the offset indicates that the sensing window of the second detector 30 is arranged to not receive incident light travelling in the first direction E and/or the attenuation direction A.

Figure 1 shows an example of an optical cell density sensor 100 where there is a single second detector 30. However, it is appreciated that there could be a plurality of second detectors 30 - each arranged at a different deflected direction D.

Typically, the second detector 30 will comprise a detector surface which detects the light that impacts thereupon. A second detector plane is then defined perpendicular to this second detector surface. The second detector plane is substantially offset from or transverse to the first direction E. Specifically, a second angle may be defined between the second detector plane and the first direction E. This second angle may be between 80° and 100° - i.e. 10° either side of perpendicular. In certain examples, the second detector plane and the first direction E may be substantially perpendicular (including perpendicular). In other words, the second angle may be substantially 90° (including 90°).

The second detector 30 therefore receives scattered light from the light source 10. The second detector 30 generates a scattered light signal which is indicative of the amount of scattered light received. This scattered light signal is indicative of the cell density - more suspended cells 2 results in an increase in the attenuated light signal. In other words, the scattered light signal is proportional to the cell density. Having the second angle close to 90° results in improved linearity of the scattered light signal based on the density of the suspended cells 2. It also results in the dynamic range (i.e. the difference between the smallest amount of suspended cells 2 and the largest amount of suspended cells 2 which can be detected) is greater.

This arrangement of the first detector 20 and the second detector 30 can also be considered with respect to one another. That is, the first detector plane and the second detector plane may be transverse to one another. For example, a third angle may be defined between the first detector plane and the second detector plane. The third angle may be between 80° and 100° - i.e. 10° either side of perpendicular. In certain examples, the first detector plane and the second detector plane may be substantially perpendicular (including perpendicular). In other words, the third angle may be substantially 90° (including 90°).

The light source 10, first detector 20, and second detector 30 form a probe head of the optical cell density sensor 100. This probe head being a part of a body 1 of the optical cell density sensor 100. The body 1 fixes the light source 10, first detector 20, and second detector 30 in their respective positions.

The optical cell density sensor 100 further comprises a processor. The processor may control operation of the light source 10. That is, the processor 10 can turn on and/or the light source 10. This processor may be within the body 1 of the optical cell density sensor 100, or may be provided externally. The processor receives the attenuated light signal and the scattered light signal. The processor is then configured to calculate cell density based on both of the attenuated light signal and the scattered light signal.

For example, this could be based on a comparison of the attenuated light signal and the scattered light signal. The respective strengths of each signal can provide a more accurate indication of the cell density. In particular cases, this could be a ratio of the scattered light signal to the attenuated light signal. For example, the scattered light signal divided by the attenuated light signal may be proportional to the cell density.

In certain examples, the processor may incorporate a machine learning algorithm which is trained based on attenuated light signals and scattered light signals, and cell density measured in another way. This training can result in an identified relationship between the attenuated light signal, the scattered light signal, and the cell density which can then be used to calculate the cell density by the processor.

In certain other examples, the processor may be configured to calculate cell density based on just one of the attenuated light signal, or the scattered light signal. The relationship between each of these signals and the cell density is discussed above.

Specifically, for example, the processor may calculate cell density based just on the scattered light signal. In such a case, the optical cell density sensor 100 may not include the first detector 20. All of the arrangements and modifications discussed herein can be applied to this example, with appropriate modifications to handle the fact that the calculation is only on the scattered light signal (such as not having a first detector 20).

A flow damper may be provided on an inlet (or an outlet) of the optical cell density sensor 100, to inhibit the flow of fluid with suspended cells 2.

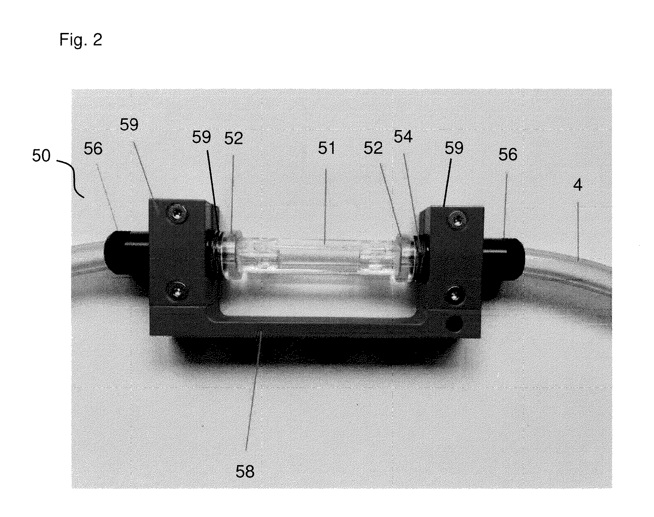

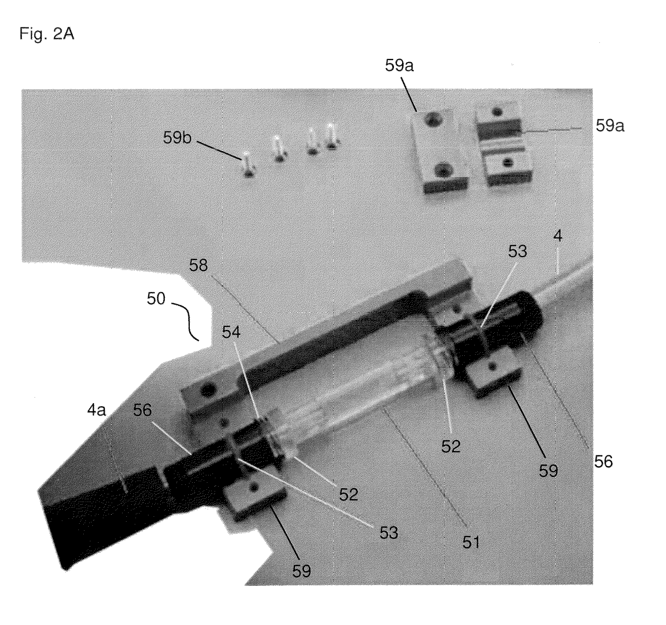

Figures 2 and 2A show a sensor cell 50 which can help improve reliability of the optical cell density sensor 100. The combination of the optical cell density sensor 100 and the sensor cell 50 can be identified as an optical cell density apparatus. Specifically, when using optical light to calculate cell density in this manner it can be important to standardize the shape and/or properties of the conduit 1 which the first direction E passes through. The sensor cell 50 receives the flow of fluid with suspended cells 2 and is arranged such that the first direction passes through a testing section 51 of the sensor cell 50.

As shown in Figure 2, the testing section 51 may be substantially central in the sensor cell 50. However, other arrangements are equally possible. The testing section 51 is arranged to help standardize the testing arrangements.

For example, the testing section 51 may have a regular polygonal cross-section. Specifically, the testing section 51 may be substantially cuboid. The testing section 51 has a lumen for the fluid with suspended particles 2 to pass through. This lumen may have the same shape as the testing section 51. That is, the lumen may have the same regular polygonal cross-section.

In the optical cell density sensor apparatus, a side of the polygon may be substantially perpendicular to one or more of: the first direction E; the first detector plane; and/or the second detector plane. This can help ensure that the testing section 51 does not significantly deflect light passing therethrough.

Similarly, the testing section 51 may have a polished outer surface. That is, a surface which is treated to remove outer surface roughness. Again, this can help avoid light being inadvertently deflected.

The testing section 51, in general, can be defined as electro-magnetically transparent in the frequency range emitted by the light source 10. For example, optically transparent and/or (near) infrared transparent.

As shown in Figures 2 and 2A the sensor cell 50 may have a rigid outer frame. This rigid outer frame formed of a central body 58, with a first arm 59 projecting from a first end of the central body 58 and a second arm 59 projecting from a second end of the central body 58. The first end and the second end being opposite to one another. The central body 58 may be elongate - i.e. it is longer than it is wide. The rigid outer frame may be described as "U-shaped" or "C-shaped". The testing section 51 may be supported between the first arm 59 and the second arm 59.

This rigid frame can help ensure that the testing section 51 is positioned and orientated in a particular way with respect to the light source 10, the first detector 20, and/or the second detector 30.

Figure 2A shows the sensor cell 50 partially disassembled. In this partially disassembled state it can be seen how there are adaptors 56 either side of the testing section 51. These adaptors 56 connect the testing section 51 to adjacent fluid conduits 4. The adaptors 56 can be supported by the rigid frame. For example, in Figure 2A there is an adaptor 56 supported by the first arm 59 and an adaptor 56 supported by the second arm 59. In this example, each of the first arm 59 and the second arm 59 is formed in two parts, with a removable arm section 59a. The removeable arm section 59a is attachable to a fixed arm section via one or more fasteners 59b. Each adaptor 56 may be retained between the removeable arm section 59a and the fixed arm section.

The testing section 51 may be permanently affixed to the rigid frame, or to the adaptors 56. For example, this could be with a permanent adhesive. By permanent it is meant that the fixation cannot be undone without damaging the components.

An opaque covering may be provided around the adjacent fluid conduits 4, to prevent light inlet to the testing section 51. For example, this could be a foam cover about the adjacent fluid conduits - or a rigid covering.

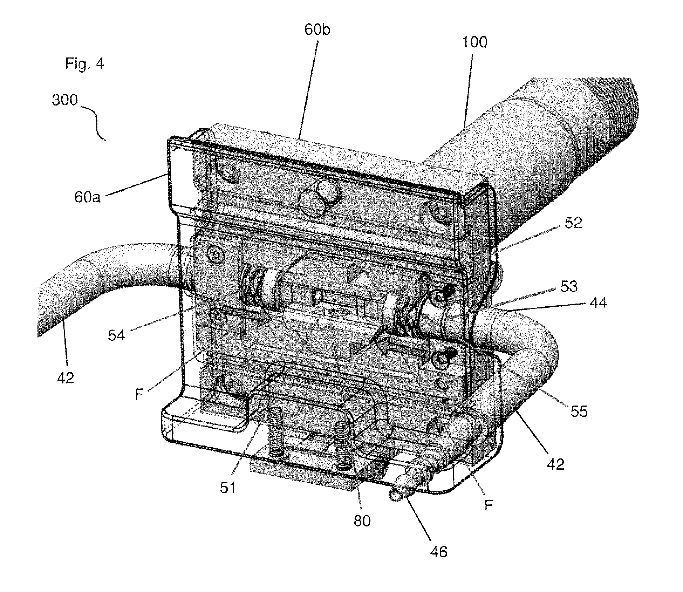

Figure 4 will be discussed in more detail below, but this shows a particular arrangement for the adjacent fluid conduits 4. In this case, the fluid conduits 4 form a non-linear flow path for the fluid containing suspended' particles 2. Specifically, this may comprise a central section 44 (formed of two separate pieces separated by the testing section 51), and first projecting section 42 and second projecting section 42. In other words, the non-linear flow path may be "U-shaped" or "C-shaped".

These adjacent fluid conduits 4 are attachable to an external pipe (such as a flexible pipe) via connectors 46. The connectors 46 may use any attachment mechanism, but Figure 4 shows specifically a press-fit connection.

A seal 53, such as an O-ring, may be provided between each adaptor 56 and the rigid body. This seal 53 may be held in place by the engagement of the removeable arm section 59a and the fixed arm section. For example, there may be a recess formed in the arm sections which receives the seal 53.

Of course, other arrangements for the rigid frame may be used.

The testing section 51 may be supported with one or more springs 54 between the testing structure 51 and the rigid frame. Figure 2 shows a spring 54 at either side of the testing section 51. The springs may abut the rigid body, and/or the adaptor 56 on one end, and the testing structure 51 at the other end. For example, the testing structure 51 may have a retaining shoulder 52 for engaging with an end of the spring 54. Each spring 54 may be under compression when the testing section 51 is supported. Figure 4 (discussed in more detail below) shows the force F applied by each of these springs 54. These springs 54 provide a pressure between the rigid frame and the testing section 51.

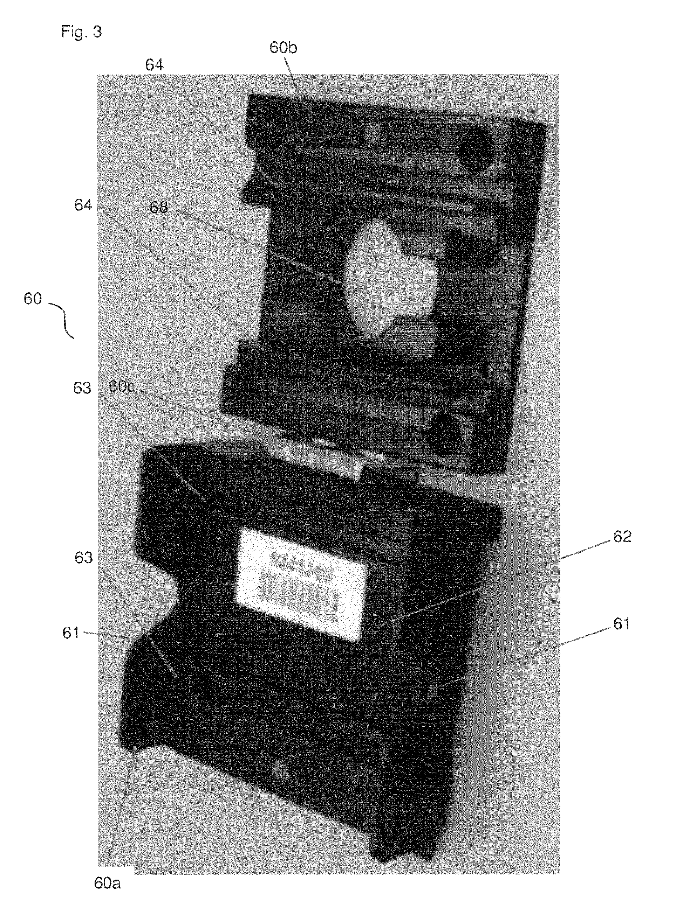

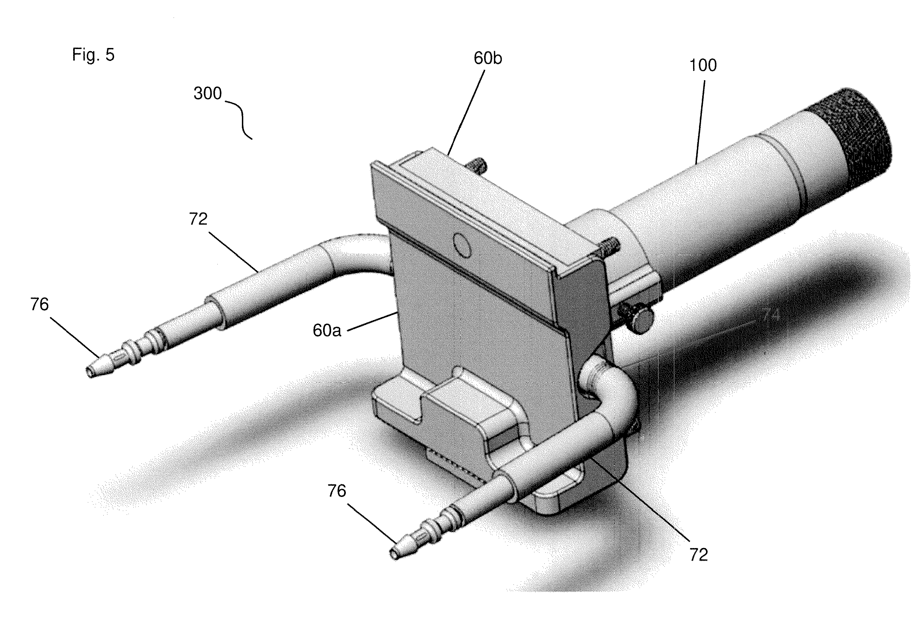

An optical cell density sensor assembly 300 can also be defined, as shown in Figures 4 and 5. This comprises the optical cell density sensor 100 as well as a manifold housing 60 as shown in Figure 3.

The manifold housing 60 is arranged to receive the optical cell density sensor 100. Again, the purpose of the manifold housing 60 is to help improve reliability of readings from the optical cell density sensor 100. The manifold housing 60 defines an internal sensing cavity 62. This internal sensing cavity 62 being the area where the sensing of the cell density takes place. This internal sensing cavity 62 is shieled from external light when the manifold housing 60 is assembled. In use, the optical cell density sensor 100 is positioned such that the light source 10, the first detector 20, and the second detector 30 are arranged in this internal sensing cavity 62. For example, as shown in Figure 3 there may be an opening 68 for receiving the optical cell density sensor 100. In examples with a sensor cell 50, this sensor cell 50 may be mounted within the internal sensing cavity 62.

The manifold housing 60, in general, can be defined as electro-magnetically opaque in the frequency range emitted by the light source 10 and/or detected by the first detector 20 and/or the second detector 30. For example, optically opaque and/or (near) infrared opaque.

The manifold housing 60 further comprises ports 61 for conduits for the fluid with suspended particles 2. These ports 61 may receive, for example, the conduits forming the non-linear fluid flow path.

Figure 3 shows an example where the manifold housing 60 is formed of a first manifold housing section 60a and a second manifold housing section 60b, which are attachable to one another to form the manifold housing. For example, in Figure 3 the first manifold housing section 60a and the second manifold housing section 60b are connected by a hinge 60c.

In order to keep light out from the internal sensing cavity 62, the first manifold housing section 60a may comprise one or more grooves 63 and the second manifold housing section 60b may comprise one or more protrusions 64. Each groove 63 has a corresponding protrusion 64 such that when assembled to form the manifold housing 60 each protrusion 64 is received in a corresponding groove 63. Of course, the opposite is also possible with the first manifold housing section 60a comprising one or more protrusions 65 and the second manifold housing section 60b comprising one or more grooves 63.

In certain cases, the first manifold housing section 60a may have at least one groove 63 and at least one protrusion 64, with the second manifold housing section 60b having at least one corresponding protrusion 64 and at least one corresponding groove 63. These can help seat the first manifold housing section 60a with respect to the second manifold housing section 60b.

This manifold housing 60 may be directly attachable to, for example, a centrifuge. This can then form a centrifuge assembly 300 with the optical cell density sensor 100.

Of course, the optical cell density sensor 100 can be used in other applications, with the manifold housing 60 potentially attached thereto. In general, this could include any bioprocess units. For example this could include one or more of a: bioreactor; seed tank; harvest tank; centrifuge; incubator; filtration unit (microfiltration, ultrafiltration, diafiltration, tangential flow filtration); chromatography; etc..

Figures 4 and 5 show the optical cell density sensor assembly 300, formed of the manifold housing and optical cell density sensor 100. In these examples, the sensor cell 50 is also a provided component, but this is not required.

In Figure 4, the first manifold housing section 60a is shown transparent so the internal components can be seen. This shows the internal sensing cavity 62 with the optical cell density sensor 100 located therein.

A sensor alignment element 80 (such as a sensor alignment fork) may be provided, to maintain an alignment between the optical cell density sensor 100 and the flow of fluid. For example, this could be between the optical cell density sensor 100 and the testing section 51.

In use, the optical cell density sensor 100 can be inserted through the opening 68, and the sensor alignment element 80 then ensures that it is correctly oriented. For example, the sensor alignment element 80 may have a recess which receives the optical cell density sensor 100, thereby fixing its alignment with respect to the manifold housing 60.

The optical cell density sensor 100 and/or the manifold housing 60 may comprise one or more alignment indicators. The alignment indicators used to indicate a respective orientation between the optical cell density sensor 100 and the manifold housing 60. Specifically, this may indicate an orientation between the optical cell density sensor 100 (and the first direction E of emitted light therefrom) to the sensor cell 50 and a flow direction therethrough. Typically, first direction E may be substantially perpendicular (including strictly perpendicular) to the flow direction. In Figure 1, the flow direction is coming out of the page (or into the page).

Alignment of the optical cell density sensor 100 in the manifold housing 60 may also be checked by performing a calibration test. A test fluid with a known cell density is passed through the optical cell density sensor assembly 300, and a cell density calculated from the attenuated light signal and/or the scattered light signal from the optical cell density sensor 100 is compared to the known cell density. A method for this test includes: inserting an optical cell density sensor 100 into a manifold housing 60 to form an optical cell density sensor assembly 300; flowing a test fluid, with reference parameters including one or more of: a known cell density and/or a known attenuated light signal and/or a known scattered light signal, past the optical cell density sensor 100; and comparing an attenuated light signal and/or a scattered light signal (or a cell density calculated therefrom) to the reference parameters.

A corresponding method for measuring cell density in a flow of fluid with suspended cells is also provided. This method comprises: emitting light in a first direction passing through the flow of fluid (i.e. light which is not deflected and/or does not impact one or more of the suspended cells 2); detecting attenuated light substantially aligned with the first direction and generating an attenuated light signal; detecting scattered light substantially offset from the first direction and generating a scattered light signal (i.e. light which does impact one or more of the suspended cells 2); and calculating cell density based on the attenuated light signal and the scattered light signal.

This method can specifically be applied using the optical cell density sensor 100 as discussed herein.

Any of the modifications discussed herein in relation to the optical cell density sensor 100 are equally applicable to this corresponding method - whether the optical cell density sensor 100 described herein is specifically used.

For example, the cell density may be calculated based on a comparison of the attenuated light signal and the scattered light signal. The respective strengths of each signal can provide a more accurate indication of the cell density. In particular cases, this could be a ratio of the scattered light signal to the attenuated light signal. For example, the scattered light signal divided by the attenuated light signal may be proportional to the cell density.

The attenuated light may be detected at a first angle to the first direction. The first angle being between ±10°. That is, 10° in either direction. Specifically, the attenuated light may be detected substantially parallel (including parallel) to the first direction. In other words, the first angle may be substantially 0° (including 0°).

The scattered light may be detected at a second angle to the first direction, the second angle between 80° and 100° - i.e. 10° either side of perpendicular. In certain examples, the scattered light may be detected substantially perpendicular (including perpendicular) to the first direction. In other words, the second angle may be substantially 90° (including 90°). Having the second angle close to 90° results in improved linearity of the scattered light signal based on the density of the suspended cells 2. It also results in the dynamic range (i.e. the difference between the smallest amount of suspended cells 2 and the largest amount of suspended cells 2 which can be detected) is greater.

As noted above, the optical cell density sensor 100, the optical cell density sensor apparatus, the optical cell density sensor assembly 300 and/or the method can be used in conjunction with a centrifuge.

For example, PCT Patent Application No. PCT/EP2024/063438, the entire contents of which is hereby incorporated by reference, discloses an example of such a centrifuge.

In this disclosure, a centrifuge assembly is provided comprising: a rotor, rotationally mounted about an axis of rotation, the rotor comprising a first rotor port and a second rotor port, the second rotor port radially spaced from the first rotor port with respect to the axis of rotation; an inlet port and an outlet port; valving configured to selectively fluidically connect: the inlet port with the first rotor port and the outlet port with the second rotor port in a first configuration of the valving; or the inlet port with the second rotor port and the outlet port with the first rotor port in a second configuration of the valving.

An optical cell density sensor 100 may be provided fluidically connected to the outlet port downstream of the valving. This may be the only cell density sensor in a flow loop defined between the outlet port and the inlet port.

A processor may be in communication with the optical cell density sensor 100 and may receive a signal indicative of cell density. This processor may then be configured to adjust one or more operating parameters of the centrifuge assembly in response to the received signal.

A method of operating the centrifuge assembly is also provided. This centrifuge assembly as discussed herein, and also comprising a pump fluidically connected to the inlet port upstream of the valving, the pump for driving fluid through the rotor. Optionally, the pump is configured to only drive fluid in a single direction in a mode of operation.

The method comprises: operating the pump in a first direction with the valving in the first configuration to drive fluid to the inlet port then the first rotor port and then the second rotor port; switching the valving from the first configuration to the second configuration; and operating the pump in the first direction with the valving in the second configuration to drive fluid to the inlet port then the second rotor port and then the first rotor port.

An optical cell density sensor 100 as discussed herein can be used with this method. The optical cell density sensor 100 fluidically connected to the outlet port downstream of the valving. The method then further comprises the steps of: with the valving in the first configuration sensing an output parameter of the fluid with the optical cell density sensor 100; and with the valving in the second configuration sensing an output parameter of the fluid with the optical cell density sensor 100.

A method of calibrating the centrifuge assembly is also provided. This centrifuge assembly as discussed herein, and also comprising a pump fluidically connected to the inlet port upstream of the valving, the pump for driving fluid through the rotor. Optionally, the pump is configured to only drive fluid in a single direction in a mode of operation. In this method, the optical cell density sensor 100 as discussed herein may be used.

The calibration method comprises the steps of: operating the pump in a first direction with the valving in the first configuration to drive the fluid to the inlet port then the first rotor port and then the second rotor port to capture live cells in the rotor and elutriate dead cells and measuring a first optical absorbance with the optical cell density sensor 100; and defining a background noise based on the first optical absorbance.

Optionally the method further comprises the steps of: increasing the pump speed in the first direction; identifying a change in the measured optical absorbance with the optical cell density sensor 100; and comparing the background noise to a second optical absorbance before the change in the measured optical absorbance.

With the valving in the second configuration, a background noise may be subtracted from a measured optical absorbance from the optical cell density sensor 100 to determine the output parameter of the fluid, wherein the background noise is calculated according to the calibration method.

In this sense, the optical cell density sensor 100 can be used in accordance with the disclosure of PCT Patent Application No. PCT/EP2024/063438. As noted above, this disclosure is incorporated herein by reference and any arrangements or modifications discussed therein can be applied to the disclosure above in relation to using the optical cell density sensor 100 of the present disclosure with the disclosure of PCT Patent Application No. PCT/EP2024/063438.

It will be appreciated that embodiments of the disclosure may be implemented using a variety of different information processing systems. In particular, although the Figures and the discussion thereof provide exemplary computing systems and methods, these are presented merely to provide a useful reference in discussing various aspects of the disclosure. Embodiments may be carried out on any suitable data processing device, such as a personal computer, laptop, tablet, personal digital assistant, mobile telephone, smart phone, set top box, television, server computer, etc.. Of course, the description of the systems and methods has been simplified for purposes of discussion, and they are just one of many different types of systems and methods that may be used. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor/controller of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

It will be appreciated that, insofar as embodiments of the disclosure are implemented by a computer program, then a storage medium and a transmission medium carrying the computer program form aspects of the disclosure. The computer program may have one or more program instructions, or program code, that, when executed by a computer, causes an embodiment of the disclosure to be carried out. The term "program" as used herein, may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a Blu-ray disc), or a memory (such as a ROM, a RAM, EEPROM, EPROM, Flash memory or a portable/removable memory device), etc.. The transmission medium may be a communications signal, a data broadcast, a communications link between two or more computers, etc..

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

As used herein, including in the claims, unless the context indicates otherwise, singular forms of the terms herein are to be construed as including the plural form and, where the context allows, vice versa. For instance, unless the context indicates otherwise, a singular reference herein including in the claims, such as "a" or "an" (such as a component or an element) means "one or more" (for instance, one or more components, or one or more elements). Throughout the description and claims of this disclosure, the words "comprise", "including", "having" and "contain" and variations of the words, for example "comprising" and "comprises" or similar, mean that the described feature includes the additional features that follow, and are not intended to (and do not) exclude the presence of other components.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

Any steps described in this specification may be performed in any order or simultaneously unless stated or the context requires otherwise. Moreover, where a step is described as being performed after a step, this does not preclude intervening steps being performed.

All of the aspects and/or features disclosed in this specification may be combined in any combination, except combinations where at least some of such features and/or steps are mutually exclusive. In particular, the preferred features of the disclosure are applicable to all aspects and embodiments of the disclosure and may be used in any combination. Likewise, features described in non-essential combinations may be used separately (not in combination).

A method of manufacturing and/or operating any of the devices disclosed herein is also provided. The method may comprise steps of providing each of the features disclosed and/or configuring or using the respective feature for its stated function.

### CLAUSES:

1. An optical cell density sensor comprising:
   a light source arranged to emit light in a first direction for passing through a flow of fluid with suspended cells;
   a first detector substantially aligned with the first direction, arranged to detect attenuated light from the light source and generate an attenuated light signal;
   a second detector substantially offset from the first direction, arranged to detect scattered light from the light source and generate a scattered light signal; and
   a processor configured to calculate cell density based on the attenuated light signal and the scattered light signal.
2. The optical cell density sensor of clause 1, wherein the processor is configured to calculate cell density based on a comparison of the attenuated light signal and the scattered light signal.
3. The optical cell density sensor of clause 2, wherein the comparison is a ratio of the scattered light signal to the attenuated light signal.
4. The optical cell density sensor of any preceding clause, wherein the first detector comprises a first detector surface for detecting light, with a first detector plane defined perpendicular to the first detector surface, the first detector plane and the first direction defining a first angle therebetween, the first angle between ±10°.
5. The optical cell density sensor of clause 4, wherein the first detector plane and the first direction are substantially parallel.
6. The optical cell density sensor of any preceding clause, wherein the second detector defines a second detector surface for detecting light, with a second detector plane perpendicular to the second detector surface, the second detector plane and the first direction defining a second angle therebetween, the second angle between 80° and 100°.
7. The optical cell density sensor of clause 6, when dependent on clause 4, wherein the first detector plane and the second detector plane are substantially perpendicular.
8. The optical cell density sensor of clause 6 or 7, wherein the second detector plane and the first direction are substantially perpendicular.
9. An optical cell density sensor apparatus, comprising:
   the optical cell density sensor of any preceding clause; and
   a sensor cell for receiving the flow of fluid with suspended cells, the sensor cell arranged with the first direction passing through a testing section of the sensor cell.
10. The optical cell density assembly sensor apparatus of clause 9, wherein the sensor cell comprises an cell input for attachment to a fluid input line and a cell output for attachment to a fluid output line.
11. The optical cell density sensor apparatus of clause 9 or 10, wherein the testing section has a regular polygonal cross-section.
12. The optical cell density sensor apparatus of any of clauses 9 to 11, wherein the testing section is substantially cuboid.
13. The optical cell density sensor apparatus of any of clauses 9 to 12, wherein the testing section has a polished outer surface.
14. The optical cell density sensor apparatus of any of clauses 9 to 13, wherein the sensor cell comprises a rigid frame supporting the testing section.
15. The optical cell density sensor apparatus of clause 14, wherein the rigid frame is substantially U-shaped comprising a central body with a first arm projecting from a first end of the central body and a second arm projecting from a second end of the central body, the testing section extending between the first arm and the second arm.
16. The optical cell density sensor apparatus of clause 14 or 15, wherein the testing section is supported by the rigid frame with one or more springs between the testing section and the rigid frame.
17. The optical cell density sensor apparatus of any of clauses 9 to 16, wherein the sensor cell further comprises a non-linear flow path for the flow of fluid.
18. The optical cell density sensor apparatus of clause 17, wherein the flow path is substantially U-shaped comprising a central section with a first projecting section at a first end of the central section and a second projecting section at a second end of the central section.
19. An optical cell density sensor assembly, comprising:
   the optical cell density sensor of any of clauses 1 to 8, or the optical cell density sensor apparatus of any of clauses 9 to 18; and
   a manifold housing with an internal sensing cavity, the internal sensing cavity shielded from external light, wherein the light source, first detector and second detector are arranged in the internal sensing cavity.
20. The optical cell density sensor assembly of clause 19, wherein the manifold housing is formed of a first manifold housing section and a second manifold housing section attachable to one another,
   wherein the first manifold housing section comprises one or more grooves and the second manifold housing section comprises one or more protrusions, or vice versa, each groove for receiving a corresponding protrusion with the first manifold housing section attached to the second manifold housing section.
21. The optical cell density sensor assembly of clause 20, wherein the first manifold housing section comprises at least one groove and at least one protrusion, and the second manifold housing section comprises at least one corresponding projection and at least one corresponding groove.
22. A centrifuge assembly, comprising:
   a centrifuge; and
   the optical cell density sensor assembly of any of clauses 19 to 21.
23. A method of measuring cell density in a flow of fluid with suspended cells, the method comprising:
   emitting light in a first direction passing through the flow of fluid;
   detecting attenuated light substantially aligned with the first direction and generating an attenuated light signal;
   detecting scattered light substantially offset from the first direction and generating a scattered light signal; and
   calculating cell density based on the attenuated light signal and the scattered light signal.
24. The method of clause 23, wherein the cell density is calculated based on a comparison of the attenuated light signal and the scattered light signal.
25. The method of clause 24, wherein the comparison is a ratio of the scattered light signal to the attenuated light signal.
26. The method of any of clauses 23 to 25, wherein the attenuated light is detected at a first angle to the first direction, the first angle between ±10°.
27. The method of clause 26, wherein the attenuated light is detected substantially parallel to the first direction.
28. The method of any of clauses 23 to 27, wherein the scattered light is detected at a second angle to the first direction, the second angle between 80° and 100°.
29. The method of clause 28, wherein the scattered light is detected substantially perpendicular to the first direction.

## Claims

1. An optical cell density sensor comprising:
a light source arranged to emit light in a first direction for passing through a flow of fluid with suspended cells;
a first detector substantially aligned with the first direction, arranged to detect attenuated light from the light source and generate an attenuated light signal;
a second detector substantially offset from the first direction, arranged to detect scattered light from the light source and generate a scattered light signal; and
a processor configured to calculate cell density based on the attenuated light signal and the scattered light signal.

2. The optical cell density sensor of claim 1, wherein the processor is configured to calculate cell density based on a comparison of the attenuated light signal and the scattered light signal,
preferably the comparison is a ratio of the scattered light signal to the attenuated light signal.

3. The optical cell density sensor of any preceding claim, wherein the first detector comprises a first detector surface for detecting light, with a first detector plane defined perpendicular to the first detector surface, the first detector plane and the first direction defining a first angle therebetween, the first angle between ±10°,
preferably the first detector plane and the first direction are substantially parallel.

4. The optical cell density sensor of any preceding claim, wherein the second detector defines a second detector surface for detecting light, with a second detector plane perpendicular to the second detector surface, the second detector plane and the first direction defining a second angle therebetween, the second angle between 80° and 100°, preferably the second detector plane and the first direction are substantially perpendicular.

5. The optical cell density sensor of claim 4, when dependent on claim 3, wherein the first detector plane and the second detector plane are substantially perpendicular.

6. An optical cell density sensor apparatus, comprising:
the optical cell density sensor of any preceding claim; and
a sensor cell for receiving the flow of fluid with suspended cells, the sensor cell arranged with the first direction passing through a testing section of the sensor cell, preferably the sensor cell comprises an cell input for attachment to a fluid input line and a cell output for attachment to a fluid output line.

7. The optical cell density sensor apparatus of claim 6, wherein the testing section:
has a regular polygonal cross-section; and/or
is substantially cuboid; and/or
has a polished outer surface.

8. The optical cell density sensor apparatus of any of claims 6 to 7, wherein the sensor cell comprises a rigid frame supporting the testing section,
preferably the rigid frame is substantially U-shaped comprising a central body with a first arm projecting from a first end of the central body and a second arm projecting from a second end of the central body, the testing section extending between the first arm and the second arm.

9. The optical cell density sensor apparatus of claim 8, wherein the testing section is supported by the rigid frame with one or more springs between the testing section and the rigid frame.

10. The optical cell density sensor apparatus of any of claims 6 to 9, wherein the sensor cell further comprises a non-linear flow path for the flow of fluid,
preferably the flow path is substantially U-shaped comprising a central section with a first projecting section at a first end of the central section and a second projecting section at a second end of the central section.

11. An optical cell density sensor assembly, comprising:
the optical cell density sensor of any of claims 1 to 5, or the optical cell density sensor apparatus of any of claims 6 to 10; and
a manifold housing with an internal sensing cavity, the internal sensing cavity shielded from external light, wherein the light source, first detector and second detector are arranged in the internal sensing cavity.

12. The optical cell density sensor assembly of claim 11, wherein the manifold housing is formed of a first manifold housing section and a second manifold housing section attachable to one another,
wherein the first manifold housing section comprises one or more grooves and the second manifold housing section comprises one or more protrusions, or vice versa, each groove for receiving a corresponding protrusion with the first manifold housing section attached to the second manifold housing section,
preferably the first manifold housing section comprises at least one groove and at least one protrusion, and the second manifold housing section comprises at least one corresponding projection and at least one corresponding groove.

13. A centrifuge assembly, comprising:
a centrifuge; and
the optical cell density sensor assembly of any of claims 11 to 12.

14. A method of measuring cell density in a flow of fluid with suspended cells, the method comprising:
emitting light in a first direction passing through the flow of fluid;
detecting attenuated light substantially aligned with the first direction and generating an attenuated light signal;
detecting scattered light substantially offset from the first direction and generating a scattered light signal; and
calculating cell density based on the attenuated light signal and the scattered light signal.

15. The method of claim 14, wherein the cell density is calculated based on a comparison of the attenuated light signal and the scattered light signal,
preferably the comparison is a ratio of the scattered light signal to the attenuated light signal.

16. The method of any of claims 14 to 15, wherein the attenuated light is detected at a first angle to the first direction, the first angle between ±10°,
preferably the attenuated light is detected substantially parallel to the first direction.

17. The method of any of claims 14 to 16, wherein the scattered light is detected at a second angle to the first direction, the second angle between 80° and 100°,
preferably the scattered light is detected substantially perpendicular to the first direction.
